# EUROPEAN PATENT SPECIFICATION

(11) **EP 2 418 521 B1**
(45) Date of publication and mention of the grant of the patent: **23.08.2017**
(21) Application number: 11153179.4
(22) Date of filing: 03.02.2011
(51) Int. Cl.: G02B 5/08

(54) **A method of making a temperature resistant highly reflective aluminium based surface for solar reflector applications and reflector parts made thereof**
Verfahren zur Herstellung einer temperaturbeständigen, hochreflektierenden Oberfläche auf Aluminiumbasis für Solarreflektoranwendungen und Reflektorteile daraus
Procédé de fabrication d'une surface à base d'aluminium hautement réfléchissant résistant à la température pour application de réflecteur solaire et pièces de réflecteur ainsi fabriquées

(30) Priority: 02.08.2010 GB 201012965
(43) Date of publication of application: 15.02.2012
(73) Proprietor: Almeco S.p.A., 20098 San Giuliano Milanese (IT)
(72) Inventor: Dowell, Alan, Amersham, Buckinghamshire HP6 6HJ (GB)
(74) Representative: Strehl Schübel-Hopf & Partner

(56) References cited:
- GB-A- 2 371 562
- US-A- 5 403 657
- US-A- 5 779 871
- US-A- 5 856 020
- US-A- 5 919 561
- US-A- 5 978 133
- US-A1- 2003 048 554
- US-A1- 2006 063 010

## Description

### BACKGROUND OF THE INVENTION

It is well known to use systems of mirrors to concentrate the sun's rays in order to generate heat and to employ this heat to generate electricity.

Reflector systems for the generation of solar thermal energy can employ various mirror designs, including curved or parabolic trough systems, Fresnel systems or parabolic dishes to form the primary reflecting units. These primary reflectors concentrate the sun's rays onto a tube or receptor which becomes heated by the concentrated rays and contains a heat transfer medium which can be used to generate steam or process heat. The receptors and collector tubes are generally quite small in size compared to the size of the mirrors collecting the solar rays.

Since the primary reflectors may not be perfect in geometry or surface flatness and the angular deviation tolerance for the reflected rays is quite small, some of the reflected rays can miss the target thermal collector resulting in a lower efficiency of energy generation.

To overcome this problem it can be advantageous to employ a secondary mirror to concentrate these scattered rays and re-direct them to the thermal collector surface.

Existing materials which have been used for this secondary mirror application include mirror reflective aluminium sheet and strip which is processed by electrochemical and PVD vacuum coating techniques to produce a surface with a reflectivity in excess of 95%.

The production process consists of taking mirror rolled aluminium coils and treating them by electro-chemical brightening to improve surface reflection characteristics followed by anodizing to about 1 micron coating thickness to provide a hard and durable substrate for subsequent coating.

The high reflectance properties are imparted by a further multi-stage treatment process in vacuum which has three key steps. Firstly an optically dense layer of metallic aluminium or silver is applied by physical vapour deposition (PVD) to the anodized metal to provide a high reflectance base layer. Secondly a layer of low refractive index (index range 1.3-1.8) transparent material, such as magnesium fluoride, aluminium oxide or silicon oxide is applied by PVD and thirdly, this is followed by a high refractive index layer (index range 1.8-3.0) of transparent material such as tin oxide, titanium oxide or zirconium oxide. The combination of these layers results in total reflectance values of over 95% for products made using an aluminium reflection layer and over 98% for products made using a silver reflection layer.

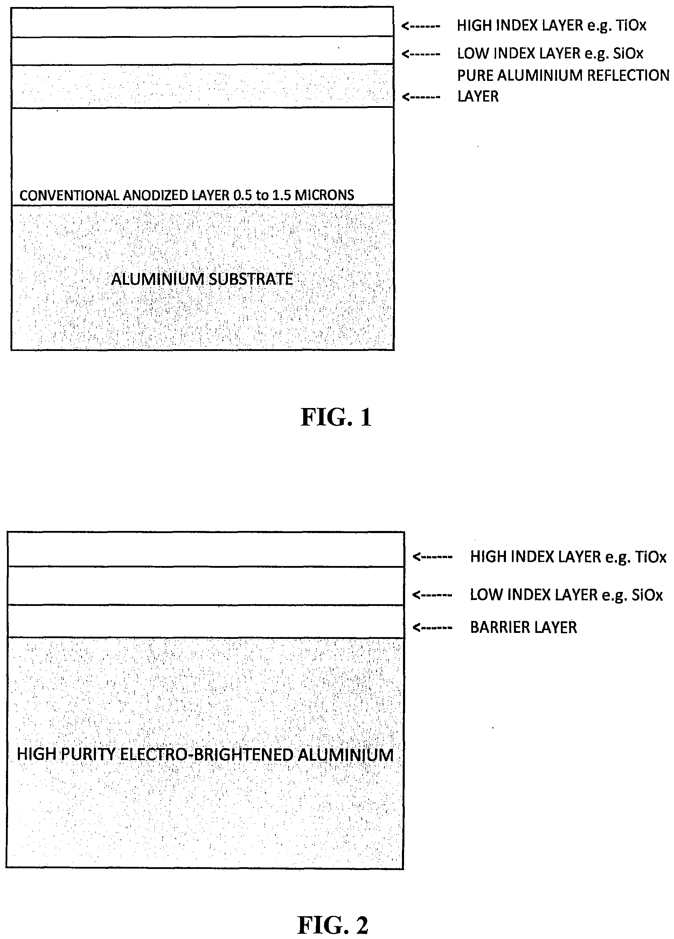

The final layer structure of the existing products is shown in Figure 1.

Several such products exist on the market, known commonly as "enhanced aluminium reflectors" and these have been tested in secondary reflector applications. However, operational experience has shown that the secondary reflectors can reach relatively high temperatures, 300°C or more, and that after prolonged exposure at these temperatures the reflectance begins to fall, lowering the efficiency of the mirror system and provoking an even greater rise in the temperature of the secondary reflector and a further fall in reflectance.

This lack of temperature resistance is therefore very damaging to performance.

Our extensive investigations of the mechanism by which the enhanced aluminium mirrors lose their reflective properties have led us to the invention of a new method for producing the mirror material used for the reflectors, for which we hereby seek the granting of a patent.

### SUMMARY OF THE INVENTION

The invention is defined by the claims.

In our invention an aluminium strip with a mirror surface achieved by bright rolling is treated by cleaning and electrochemically brightening to provide a smooth haze free surface.

Up to this point the processing is the same as for normal enhanced aluminium mirror preparation.

However, instead of being anodized by conventional means to provide a hard substrate between 0.5 and 1.5 microns thick as is the normal practice, it is anodized under conditions to form a non-porous barrier coat to produce an extremely thin but dense and hard transparent coating of aluminium oxide of carefully controlled thickness, known as a "barrier layer". The process is commonly known as barrier layer anodizing.

A key element in our new method of manufacturing is the application of this protective barrier layer coating over the aluminium reflective layer and the control of its thickness and properties to optimize the combination of high reflectivity and resistance to oxidation.

The barrier layer may be produced according to known procedures by immersing the strip in a bath of electrolyte formed from a diluted solution of one or more of the following acids and applying a positive voltage of between 2 and 200V for a time between 10 and 300 seconds appropriate to the rate of coating formation and the desired coating thickness, preferably between 20 and 200 nm, suitable acids including but not exclusively so: Tartaric, Citric, Oxalic, Phosphoric, or Sulphuric acids or mixtures thereof or another suitable barrier layer forming electrolyte.

Following the treatment described above, the electrochemically processed coil is treated to enhance reflectivity using PVD processes under high vacuum.

However, whereas in all other coating process to manufacture enhanced aluminium reflectors, a metallic layer of aluminium or silver is PVD coated onto the surface to make a reflection layer, a key feature of the present invention is that the electrochemically processed aluminium bulk aluminium surface together with its protection coat forms the reflection layer. This is then PVD coated with a low refractive index layer (index 1.3-1.8) such as silicon or aluminium oxide of thickness between 20 and 200 nm followed by a high refractive index layer (index 1.8-3.0) such as zirconium, tin or titanium oxide of thickness between 20 and 200 nm in the conventional manner to produce a multi-layer stack that enhances reflectivity.

The electrochemically formed protective barrier layer which covers the reflecting aluminium surface serves to hinder or prevent its oxidation at high temperature and thereby greatly improves the long term performance of the complete reflector surface at high temperatures. The structure of the new layer system according to the present invention is shown in Figure 2.

### EXAMPLE

As an example and to verify the invention, an aluminium reflector strip was manufactured by electro-chemical brightening in a phosphoric acid based electrolyte according to known procedures to produce a smooth high reflection surface.

This was followed by the formation by anodic electrolytic treatment in a bath of dilute acid solution selected from the acids listed above of a protective barrier layer, comprising mainly aluminium oxide, of thickness between 20 and 100 nm.

The strip was then processed in a vacuum coating line in which were applied sequentially by PVD, without the preceding application of a PVD coated metallic reflection layer, a layer of SiOx of thickness optimized within the range 20 to 120 nm and a layer of TiOx of thickness optimized within the range 20 to 120 nm. No PVD applied high reflection layer was used.

An aluminium mirror material made according to the above method had a total reflectance of 93.5%, compared with 95% for an enhanced aluminium mirror produced according to the previous art. However, after 14 days of testing in which mirror panels were held at a temperature of 380°C, mirrors made using the method according to the present invention retained a total reflectance of 93.5% while the reflectance of mirrors made according to the previous art dropped from 95% to less than 70%.

## Claims

1. Aluminium reflector strip comprising a temperature resistant highly reflective aluminium based surface made from mirror rolled aluminium strip by electrochemical brightening in a phosphoric acid, said surface consisting of:
(a) a non-porous protective barrier layer of aluminium oxide coating of between 20 and 100 nm thickness formed directly on the electrochemically brightened surface by anodic electrolytic treatment in a bath of dilute acid solution chosen from tartaric, phosphoric, sulphuric and oxalic acids or mixtures thereof,
(b) a low refractive index transparent coating of SiOx applied by PVD coating in vacuum of thickness within the range 20 - 120 nm which is directly coated onto the non-porous barrier layer,
(c) and a high refractive index transparent coating of TiOx applied by PVD coating in vacuum of thickness within the range 20 to 120 nm, directly on the low refractive index transparent coating,
(d) such that a total reflectance of 93.5% is retained after 14 days of testing at a temperature of 380°C.

2. Method of producing an aluminium reflector strip according to claim 1, **characterized in that** the non-porous protective barrier layer of aluminium oxide is prepared by applying a positive voltage of between 2 and 200 V for a time between 10 and 300 seconds.

3. Use of an aluminium reflector strip according to claim 1 as a solar mirror for the generation of solar thermal energy.

## Patentansprüche

1. Aluminiumreflektorstreifen bzw.-band, mit einer temperaturbeständigen, hochgradig reflektierenden Oberfläche auf Basis von Aluminium, hergestellt aus einem spiegelgewalzten Aluminiumstreifen bzw.- band durch elektrochemisches Aufhellen in einer Phosphorsäure, wobei die Oberfläche aus:
(a) einer nicht-porösen Barriereschutzschicht aus einer Aluminiumoxidschicht von zwischen 20 und 100 nm Dicke, welche direkt durch anodische elektrolytische Behandlung in einem Bad aus verdünnter Säurelösung, ausgewählt aus Weinsäure, Phosphorsäure, Schwefelsäure und Oxalsäuren oder Gemischen davon, auf der elektrochemisch aufgehellten Oberfläche gebildet ist,
(b) einer transparenten Schicht mit niedrigem Brechungsindex aus SiOₓ, welche durch PVD-Beschichtung im Vakuum aufgebracht wurde und eine Dicke im Bereich von 20-120 nm aufweist, welche direkt auf die nicht-poröse Barriereschicht geschichtet ist,
(c) und einer transparenten Schicht mit hohem Brechungsindex aus TiOₓ, welche durch PVD-Beschichtung im Vakuum aufgebracht wurde und eine Dicke im Bereich von 20 bis 120 nm aufweist, direkt auf der transparenten Schicht mit niedrigem Brechungsindex,
besteht,
(d) derart, dass ein Gesamtreflexionsvermögen von 93,5% nach 14 Tagen beim Testen bei einer Temperatur 380°C erhalten bleibt.

2. Verfahren zur Herstellung eines Aluminiumreflektorstreifens bzw.-bands nach Anspruch 1, **dadurch gekennzeichnet, dass** die nicht-poröse Barriereschutzschicht aus Aluminiumoxid durch Anlegen einer positiven Spannung von zwischen 2 und 200 V für eine Zeit zwischen 10 und 300 Sekunden hergestellt wird.

3. Verwendung eines Aluminiumreflektorstreifens bzw.-bands nach Anspruch 1 als Solarspiegel zur Erzeugung von thermischer Solarenergie.

## Revendications

1. Bande de réflecteur en aluminium comprenant une surface à base d'aluminium hautement réfléchissant résistant à la température fabriquée à partir d'une bande laminée en aluminium poli miroir par brillantage électrochimique dans un acide phosphorique, ladite surface étant constituée de :
(a) une couche formant barrière de protection non poreuse constituée d'un revêtement en oxyde d'aluminium de 20 à 100 nm d'épaisseur formée directement sur la surface ayant subi un brillantage électrochimique par traitement électrolytique anodique dans un bain de solution d'acide dilué choisi parmi les acides tartrique, phosphorique, sulfurique et oxalique ou leurs mélanges,
(b) un revêtement de SiOx transparent ayant un faible indice de réfraction appliqué par revêtement par dépôt physique en phase vapeur sous vide ayant une épaisseur située dans la plage de 20 à 120 nm qui est directement appliqué sur la couche formant barrière non poreuse,
(c) et un revêtement de TiOx transparent ayant un indice de réfraction élevé appliqué par revêtement par dépôt physique en phase vapeur sous vide ayant une épaisseur située dans la plage de 20 à 120 nm, directement sur le revêtement transparent ayant un faible indice de réfraction,
(d) de manière à ce qu'une réflectance totale de 93,5 % soit conservée après 14 jours d'essai à une température de 380 °C.

2. Procédé de fabrication d'une bande de réflecteur en aluminium selon la revendication 1, **caractérisé en ce que** la couche formant barrière de protection non poreuse d'oxyde d'aluminium est préparée en appliquant une tension positive située entre 2 et 200 V pendant une durée située entre 10 et 300 secondes.

3. Utilisation d'une bande de réflecteur en aluminium selon la revendication 1 comme miroir solaire pour la production d'énergie solaire thermique.
